# EUROPEAN PATENT APPLICATION

(11) **EP 2 068 414 A1**
(43) Date of publication of application: **10.06.2009**
(21) Application number: 07023727.6
(22) Date of filing: 07.12.2007
(51) Int. Cl.: H02H 3/02

(54) **Over-current protection, in particular for protecting a device for generating a digital electric signal**

(71) Applicant: Bombardier Transportation GmbH, 10785 Berlin (DE)
(72) Inventor: Gummerson, Paul, 72244 Västeras (SE); Malis, Ingemar, 73050 Skultuna (SE)
(74) Representative: Patentanwälte Bressel und Partner

(57) **Abstract**

The invention refers to a signal generating device (2) for generating an electric signal, wherein the electric signal is a first logic signal when a signal generating path (21) carries an electric current, wherein the electric signal is a second logic signal when the signal generating path (21) does not carry an electric current and wherein the device (2) comprises (a) a first electric valve (V154) which is arranged in the signal generating path (21), (b) a first control unit (D8) which is connected to the first electric valve (V154) and which is adapted to control whether the first valve (V154) is open or closed, (c) a current detecting unit (R62, V45) which is arranged in the signal generating path (21) and/or is connected to the signal generating path (21) and which is adapted to generate a signal which depends on the size of the current which is carried by the signal generating path (21), (d) a second control unit (V46) which is connected to the current detecting unit (R62, V45) and to a gradually closable valve (V154) in the signal generating path (21) and which is adapted to limit the size of the current through the gradually closable valve (V154) by controlling this valve when the current in the signal generating path (21) increases, (e) a control arrangement (C3, A6, D8) which is connected to the first electric valve (V154) and which is adapted to close the first electric valve (V154) when the size of the current through the signal generating path (21) reaches or exceeds a threshold value for a time longer than a time interval of predetermined length.

## Description

The invention relates to an over-current protection device for protecting against high electric currents.

More particularly, the invention relates to a device for producing an electric signal, wherein the electric signal has a first logic state (e.g. "high") when a signal generating path conducts (i.e. carries) an electric current or has a second logic state (e.g. "low") when the signal generating path does not conduct an electric current. The device may be part of a railroad vehicle. In particular, the device may be part of the control of a converter (e.g. a three-phase DC to AC converter) for converting currents used to provide the driving motors, auxiliary power, or intermediate power link of the vehicle with electrical energy. However, there are many other general purpose applications in railroad vehicles, such as switching a light using the logic signals, heating/ventilation control, control of circuit breakers/relays, door control, driver's desk information by control of lamps and other signals, driving of control 'Train Lines' i.e. binary signals used throughout the railway vehicle and control of actuators and train control signals (for example to interface signalling equipment.

A detection device which is adapted to produce a digital signal, depending on whether an electric current is carried by a line or not, is known from GB 2434455. A logic "low" signal is produced, if a switch is closed, and a logic "high" signal is produced, if the switch is open.

A different expression for a device or unit which generates predefined digital logic signals is "digital output device", since it produces a digital signal which can be used as input to a data bus or computer system. In many cases, the predefined digital signals can be either a logic "low" signal or a logic "high" signal, i.e. the signal is a binary signal. The device according to the present invention may be such a digital output device. However, the device may serve for other purposes, instead.

For example, the logic signal is "high" if the current is higher than a threshold value and the logic signal is "low" if the current is smaller than a threshold value, for example if the path of the current is shut because a switch in the path is in its off-state.

Furthermore, the device of the present invention may receive such a binary digital signal and the digital signal controls whether a path of the current (which may become too high) is open or closed. In particular, wherein the digital signal changes from "high" to "low", or vice versa, the path is switched on or off.

It has been proposed earlier to provide an over-current protection device. In case that the current through a path of an electric current exceeds a predefined limit, the signal generating path is switched off. However, EMC (electromagnetic compatibility) requires that the device still operates if short over-current pulses occur due to electromagnetic fields such as 'surge currents' or 'in-rush' currents. "Harsh" electromagnetic conditions, i.e. significant electromagnetic fields with varying amplitudes and frequencies, especially happen in the environment of railway traction vehicles, such as locomotives. Reasons for this are, amongst others, the high power switching of traction applications, unstable network voltages and harmonic frequencies due to varying load, due to the power supply network structure and due to operation of several trains at the same time.

In the conventional solution with the over-current protection the device did not conform to EMC requirements since the over-current protection was susceptible to surge currents and would therefore not fulfil the requirements. Special means, such as a relay, were needed to separate the device from the test equipment during the EMC Surge test in order to fulfil the requirements.

It is an object of the present invention to provide a device of the kind mentioned above and a method of operating the device which make it possible to operate the device (and any load which is connected to the device) in the presence of electromagnetic surge pulses and make it possible to test the device in accordance with the EMC requirements.

According to a basic idea of the present invention, the current through a load path (i.e. a path of an electric load current) of the device is limited, but not immediately switched off when an over-current (e.g. the borderline between an acceptable current and an over-current is predefined by a threshold of the current) occurs. However, if the over-current continues for a predefined period, the load path is switched off.

The device may be, may be connected to or may be combined with a signal generating device as described above (e.g. with an optoelectronic coupler for producing the binary digital output). In this case, the current which may become too high and is therefore subject to over-current protection by the device is used to generate the signal. In this case, a path of the current within the device is called "signal generating path", which is a special case of a load path.

In particular, a method is proposed of operating a signal generating device for generating an electric signal, wherein the electric signal is a first logic signal when a signal generating path carries an electric current and wherein the electric signal is a second logic signal when the output signal generating path does not carry an electric current. The signal line for outputting the first or second logic signal is preferably electrically isolated from the signal generating path, for example using an optoelectronic-coupler. The signal generating path may be the path of a current which may become too high and is therefore subject to over-current protection according to the present invention.

In addition or alternatively, the device may be controlled by a logic signal, e.g. it receives the digital output of a different device as input signal. If the logic signal, which is received by the device, is in a first predefined state (e.g. "low") the load path is switched on and/or continues to be in its off-state (i.e. the load current cannot pass the path). If the logic signal, which is received by the device, is in a second predefined state (e.g. "high") the load path is switched on and/or continues to be in its on-state (i.e. the load current can pass the path). Preferably, the same switch on the load path is used to perform the control of the logic signal and to perform over-current protection (i.e. limiting the current through the path and/or switching the path shut).

In any case, the size of the current through the path which is subject to over-current protection (which is not necessarily a signal generating path) is limited, if the current reaches or if the current exceeds a predetermined threshold value. The current is switched off if the current exceeds the predetermined threshold value for a time which is longer than a time interval of predetermined length.

Furthermore, a device for performing protection against over-current (over-current protection device) comprises the following:
- a first electric valve which is arranged in the load path,
- a first control unit which is connected to the first electric valve and which is adapted to control whether the first valve is open or closed,
- a current detecting unit which is arranged in the load path and/or is connected to the load path and which is adapted to generate a signal which depends on the size of the current which is carried by the load path,
- a second control unit which is connected to the current detecting unit and to a gradually closable valve in the load path and which is adapted to limit the size of the current through the gradually closable valve by controlling this valve when the current in the load path increases.

As used in this description, the expression "electric valve" covers all controllable electrical and/or electronic switching devices (i.e. switches), for example transistors such as FETs, MOSFETs, other field effect transistors, IGBTs or other bipolar transistors.

The first control unit may be a unit which is adapted to output a predefined signal (e.g. a predefined voltage) to a control input of the first valve. The first valve may be a transistor (preferably an IGBT, Insulated Gate Bipolar Transistor) or another electronic device which comprises a control electrode, wherein the control electrode can be used to control switching on and off the electronic device.

A signal is generally understood to be a value of an electric quantity, such as a current or a voltage. The signal is transferred via a connection between at least two elements, units and/or arrangements. For example, a current is transferred via a line and the same voltage or electric potential is present at different locations of the same electric line. A logic signal is understood to be a signal having a predefined value, e.g. a voltage having a value in a predefined range of values.

The current detecting unit may comprise a resistor in the load path and the voltage across the resistor may be the signal which depends on the size of the current. However, the current detecting unit may comprise other elements alternatively or in addition to the resistor.

The second control unit may comprise a second valve (e.g. a transistor) which is connected to a control electrode of the gradually closable valve. The second valve may be connected in parallel to a section of the load path. When the current detecting unit delivers a signal to the second control unit which indicates the increase of the current, the second valve may be opened or closed (preferably according to the size of the signal value). This may cause the voltage at the control electrode of the gradually closable valve to change and to close this valve in the desired manner.

Furthermore, the device comprises a control arrangement which is connected to the first electric valve and which is adapted to close the first electric valve when the size of the current through the load path exceeds a predetermined threshold value for a time longer than a time interval of predetermined length. The control arrangement may include the first control unit.

In particular, the time interval may start when the current reaches or exceeds the predetermined threshold value. However, it is also possible that the current reaches or exceeds the predetermined threshold value repeatedly for periods of time each of which is shorter than the predetermined length. In this case the time interval starts with the first period, is interrupted from the end of the first period until the beginning of the second period and continues with the beginning of the second period. Furthermore, it is possible that the time interval is reset to zero or partly reset to a length greater than zero after one of the short periods. However, in any case, the length of the time interval is preferably predetermined by the electric properties of the device, the operating conditions and the history of over-current pulses. As a result, the device can be designed to meet a desired behaviour, in particular regarding the reset of the time interval. For example, a capacitor of the control arrangement which is charged when the current reaches or exceeds the threshold value may be used to trigger the process of switching off the valve. For example, the end of the time interval is the time determined by the event that the capacitor reaches a predetermined voltage. It depends on the operation of the capacitor whether the time interval is reset or partly reset until the beginning of the next over-current pulse or period. In particular, the process of discharging the capacitor determines the reset. For example, the properties such as resistances in a discharging path of the capacitor determine the timing of the discharging process.

It is not necessary to explicitly determine the end of the time interval or the length of the time interval. Rather, an electric or electronic element or unit, such as the capacitor, may be used and a predefined operating state of the element or unit corresponds to the end of the time interval. If the element or unit reaches the predetermined state, the process of closing i.e. turning off the first valve is triggered or initiated. In the example of the capacitor, the predetermined voltage triggers or initiates the process of closing the first valve. The value of the predetermined state may depend on the operating conditions, such as the voltage of a power supply of the arrangement, but the value is unambiguously determined, if the operating conditions are known. In other words: the operating conditions, the properties of the device and the history and timing of over-currents influence the length of the time interval.

For example, the process of closing the first valve may be triggered by a voltage (for example the voltage of the capacitor) of predefined size. A comparator, which is connected to the element or unit and which compares the voltage (which is a signal of the element or unit characterising the operating state of the element or unit) with a reference voltage, detects that the voltage has reached the reference voltage. A corresponding output signal of the comparator is used to signal that the process of closing the first valve should start. For example, the output signal (e.g. a predefined logic signal or a predetermined voltage) is transferred to the first control unit which may have an input which is connected to an output of the comparator. As a result, the first control unit controls the first valve so that the first valve is switched off, i.e. is closed.

Such a control arrangement has the advantage that short over-current pulses in the load path, for example due to surges of electromagnetic fields or in-rush currents, do not result in switching off the electric signal. On the other hand, over-currents due to short circuits safely lead to switching off the electric signal. An important fact in this context is that the current through the load path is limited until the first electric valve is switched off. This protects the device from damage until it is determined whether the over current is a short pulse or a long-term event. However, the determination may be made by any means or method, including implicit determination by automatically triggering the switching of the first electric valve when the over-current continues for predetermined time interval.

The threshold for the current through the load path may depend on the operating conditions. In particular, it may depend on an electric voltage which is used to operate the control arrangement. It is also possible, that the operating conditions influence the predetermined time. For example, a higher operating voltage may increase the threshold, but may decrease the predetermined time.

According to a preferred embodiment, the first valve and the gradually closable valve are one and the same valve in the load path. A gradually closable valve is understood to be a valve which can be controlled so that a current can still flow through the valve, but the size of the current is reduced. A preferred example of such a valve is an IGBT (Insulated Gate Bipolar Transistor) which is controlled by varying the gate-drain voltage. However, more generally speaking, the valve may be a transistor, (e.g. a MOSFET) or other electronic device which comprises a control electrode, wherein the control electrode can be used to control the size of the current through the electronic device.

If the first valve which is used to switch off the load path and the gradually closable valve are the same valve, the control arrangement may be adapted to also perform the control action for limiting the size of the current through the valve. However, it is preferred to separate the function of limiting the current size from the function of switching off the valve. Furthermore, this gives the opportunity and that the control unit (which controls the limiting of the current size) triggers and/or initiates a process which causes the control arrangement to switch off the first valve after the predetermined time. This means that the control unit may react on an increase of the current above the threshold value. In other words: The fact that the current reaches the threshold value causes the control unit to limit the current and also causes the control arrangement to start a process which leads to switching off of the first valve after the predetermined time.

Examples and further embodiments of the invention will now be described with reference to the attached drawings.
- Figure 1: shows a preferred embodiment of a signal generating device,
- Figure 2: shows a current-time diagram of the current which is carried by the signal generating path of a conventional signal generating device and
- Figure 3: shows a current-time diagram of the current in a signal generating device of the present invention.

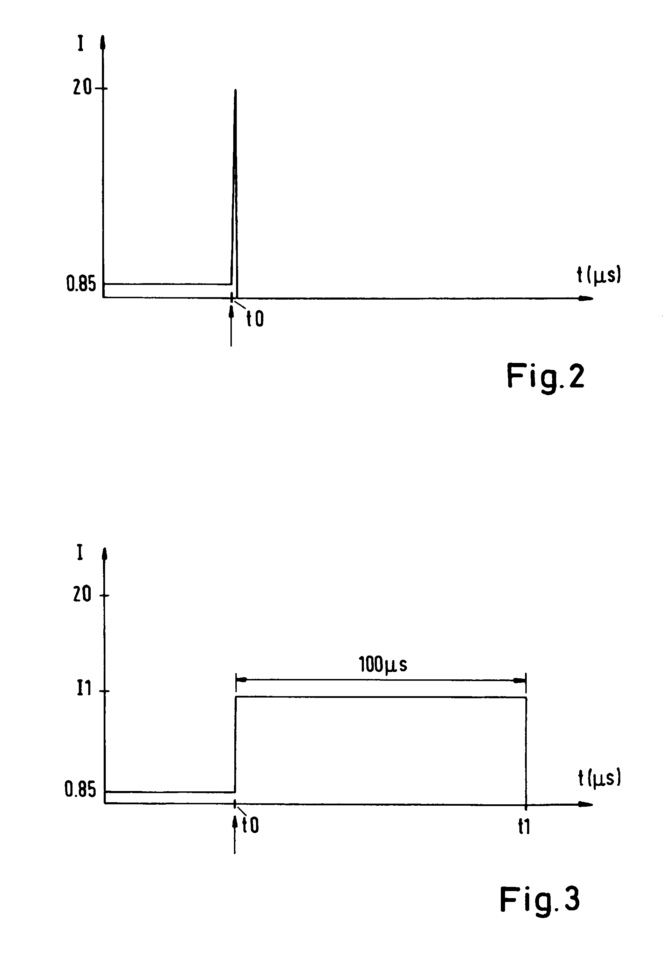

Referring to Figure 2, the behaviour of a conventional signal generating device is illustrated. The conventional device comprises means for switching off the signal generating path if an over-current occurs. At time t0, which is marked by a rapid increase in current, an over-current occurs in the signal generating path. As a result, the over-current protection immediately switches off the line (i.e. the path) of the current. Even if the over-current is not caused by a permanent event, such as a short circuit, the conventional solution will switch off the signal generating path anyway.

Figure 3 shows the behaviour of a signal generating device according to the present invention. When a permanent over-current occurs at time t0, current I rapidly increases in the line (path). However, the current limiting function of the device limits the current to a value which does not damage the device. If the over-current (as shown in Figure 3) continues for a time period of predetermined length (100 µs in the example), the device switches off the signal generating path at time t1. In the example, the current I is limited to a value I1 and the time period of predetermined length starts when the current I has reached the level of I1. However, the time period of predetermined length may also start earlier, when the current I has reached another, smaller level.

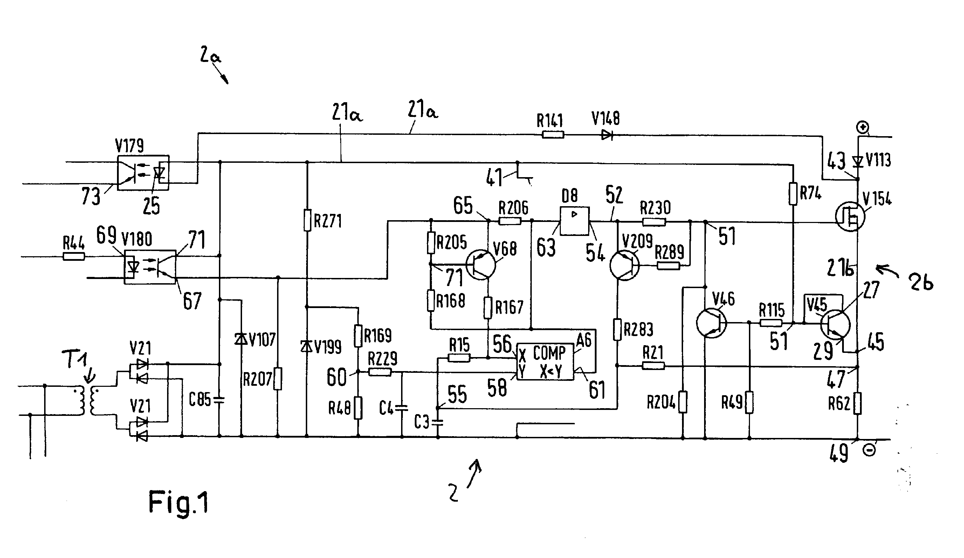

The preferred embodiment of the device is shown in Figure 1. The device 2 (which includes a device 2b for performing the over-current protection and a device 2a for signalling the operating state of the device 2b) is connected to plus potential and minus potential of a power supply as indicated by the plus sign and the minus sign in a circle on the right hand side of the Figure. In the upper half of the Figure, there is shown an additional connection to the plus potential at a connection 41. However, this is not the same plus supply as supplied at valve (diode) V113. It is an internally generated potential generated by transformer T1. The power is used to power the electronic circuitry.

At the anode of valve V113, the load path 21 b starts which may be used as a path for a current which produces a digital output as explained at the beginning of the description. Path 21 b does not include path 21 a which starts at the connection 41 and ends at connection 43 to path 21 b. Rather, path 21 b which starts at the anode of valve V113 and leads to connection 49 at the minus sign in a circle is the path for any load that is connected to the device.

On the other hand, path 21 a is used as a path for a current which controls the production of a logic signal that indicates whether path 21 b is open (because valve V154 is open) or is closed (because valve V154 is closed). This principle of producing a logic signal may be realised in other embodiments of the over-current protection device of the present invention as well.

Following this path 21 from plus potential to minus potential, the following electric or electronic elements are arranged in the path 21: an optoelectronic coupler V179 (correctly speaking a photo-diodes 25 of the coupler V179), a resistor R141, a diodes V148, a connection 43, a first valve V154 (which is a MOSFET, Metal Oxide Field Effect Transistor, in the example shown), a connection 45, a connection 47, a resistor R62 and a connection 49 which is connected to minus potential.

Minus potential and plus potential are chosen in the manner described before for this specific example. However, it is well possible that the minus potential is a positive potential compared to another reference potential. Plus and minus potential in the example shown only means that the conventional current flows from plus potential to minus potential and the minus connection may be connected to the positive terminal of a load for example a relay coil or an indication lamp, for example. This not only supplies to the example described here, but also to other embodiments of the invention.

Further elements of the circuitry of device 2 may be arranged in the path 21, such as further resistors or diodes. The plus potential connection 41 is also connected via a resistor R74 to a connection 51. The control electrode of a second valve V45 is directly connected to connection 51 and the first electrode 27 of the current path of valve V45 is also directly connected to connection 51 and to the control electrode. The other current path electrode 29 of valve V45 is connected to connection 45 on path 21. This means that a current can flow from plus potential connection 45 via resistor R74 through the valve V45 to the connection 45, if the valve V45 is open i.e. conducting.

Plus potential is also connected via a diode V113 to connection 43 on path 21 as shown in the top right corner of Figure 1.

Connection 51 is also connected with a control electrode of a third valve V46 via a resistor R115. Furthermore, the control electrode of valve V46 is connected to minus potential via a resistor R49. Consequently, plus potential is connected via connection 41, resistor R74, resistor R115 and resistor R49 to minus potential. Depending on the question whether valve V45 is open or closed, valve V46 will also be open or closed.

The current path of valve V46 connects minus potential with a connection 51 on a line 52 between a control unit (the first control unit) D8 and the control electrode (gate) of valve V154. The line 52 connects a signal output 54 of the first control unit D8 via a resistor R230 with the connection 51 and with the control electrode of valve V154.

The current path of a further valve, the fourth valve V209, and a resistor R283 are connected in series to each other and the series connection connects the output 54 of control unit D8 with a connection 55. A capacitor C3 is arranged between the connection 55 and minus potential. Consequently, if valve V209 is open, a current can flow from line 52 to the capacitor C3 and can charge the capacitor C3.

The connection 55 is also connected via a resistor R15 with a first input 56 of a comparator A6. A second input 58 of the comparator A6 is connected via a resistor R229 with a connection 60 in between a series connection of resistors R48 and R169. Resistor R169 is connected via a further resistor R271 with plus potential. As a result, according to the resistance values of the resistors R271, R169 and R48, a reference voltage is applied to the second input 58 of comparator A6.

An output 61 of the comparator A6 is connected to an input 63 of the first control unit D8. Furthermore, the input 63 is connected via a resistor R206 to a connection 65. This connection 65 is connected to the output 67 of a second optoelectronic coupler V180. This coupler V180 receives via an input 69 an external signal and if the external signal is above a threshold value, plus potential is connected via a further input 71 of coupler V180 to the output 67, to resistor R206 and to the input 63 of the first control unit D8.

Connection 65 is also connected with the current path of a fifth valve V68, wherein the current path is connected in series to a resistor R167 and this series connection connects connection 65 with the first input 56 of the comparator A6. Furthermore, the output of the comparator A6 is connected with a series connection of resistors R168 and R205, wherein this series connection of two resistors R168 and R205 connects the output 61 with connection 65. A connection point 71 in between the resistors R168 and R205 is connected to the control electrode of the fourth valve V68.

The over-current protection device 2 may comprise more elements and devices as shown in Figure 1, but these elements and devices are not necessary for the basic functionality of the device 2. However, a person skilled in the art will recognize the function of these further elements and devices, such as resistor R204 which connects connection 51 with minus potential, but has a large resistance of, for example, 10 kOhm.

### The function of the load device 2 is as follows:

During normal operation a voltage of, for example, 24V is applied to the plus connection and a load connected between the minus potential at connection 49 and the minus potential of the 24V supply. When the signal 69 is 'high' the device V154 will conduct and a load current will flow though V154 i.e. path 21 b the magnitude of which is determined by resistance of the load. At the same time since V154 is conducting a small signal current will flow from 41 through path 21 a and through path 2b indicating via V179 i.e signal 73 that V154 is conducting, this is referred to as a feedback signal. If 0.85A is flowing through the current path (drain-source) of the first valve V154, this current also causes a voltage drop across resistor R62 of, for example, 19 mV.

At the same time, the current through resistor R74 is nearly completely directed via the current path of valve V45 and via resistor R62 to minus potential. At the same time, the voltage at the control electrode of valve V45 is, for example, approximately 0.7 V. With this voltage between connection 51 and minus potential, valve V46 is closed. This means that the first valve V154 is driven with the maximum possible voltage, i.e. the voltage at the output 54 of the first control unit D8 is fully applied to the control electrode (gate) of valve V154.

When the current through the path 21 is suddenly increased, the voltage across resistor R62 increases and causes the voltage at the control electrode of valve V45 to become higher, for example, 0.9 V. This higher voltage at connection 51 causes valve V46 to open and, consequently, a current is flowing from connection 51 through the current path of valve V46 is flowing to minus potential. As a result, the voltage at the control electrode of valve 154 is reduced and the valve V154 is gradually closed, i.e. the current through valve V154 and thereby the current of load path 21 is limited. In the example given, the current through valve V154 is limited to a value of approximately 10 A. However, if the current pulse through valve V154 only reaches a value smaller than 10 A, it is limited to a smaller value.

The values of the resistors shown in Figure 1 are, for example, as follows: R141 = 2.2 kO, R62 = 0,022 Ohm, R74 = 6.8 kO, R115 = 220 Ohm, R49 = 1kO, R204 = 10kO, R21 = 22kO, R283 = 3.3 kO, R289 = 100 kO, R230 = 330 Ohm, R206 = 10 kO, R167 = 100 kO, R168 = 100 kO, R205 = 10 kO, R15 = 100 Ohm, R229 = 22 kO, R48 = 1 kO, R169 = 100 kO, R271 = 4.7 kO, R207 = 10 kO and R44 = 1 kO.

Since the valve V46 has started to conduct the potential at the control electrode of valve V209 is also effected and valve 209 starts to conduct. As a result, a current flows from the output 54 of the first control unit D8 via the current path of valve V209 and via resistor R283 to the capacitor C3 and the capacitor C3 is charged.

The reference voltage at the second input 58 of comparator A6 is normally higher than the voltage across capacitor C3. However, if capacitor C3 is continued to be charged, its voltage will reach the reference voltage and, consequently, the voltage at the first input 56 of comparator A6 reaches the level of the reference voltage. If this event happens, the output voltage at the output 61 of comparator A6, which is normally at the level of the plus potential, drops down and the comparator A6 consequently outputs a logic low signal to the input 63 of the first control unit D8 i.e. turning off V154 - the over-current protection has been activated. In the example shown, the time for charging capacitor C3 so that it reaches the reference voltage level, is approximately 100 µs, if the current through valve V154 is at the maximum possible level of 10 A. The exact value of the charging time of capacitor C3 depends on the dynamics of the current pulse through valve V154.

In the example shown, the voltage of the reference level is approximately 68 mV. The logic low signal which is output from comparator A6 to input 63 of the first control unit D8 causes the first control unit D8 to output a logic low signal, i.e. the voltage at the output 54 is reduced to a small voltage compared to minus potential. Consequently, the control electrode (here: the gate) is set to a low potential (here: the gate is discharged) and valve V154 is closed i.e. turned OFF.

The low signal 61 from A6 also activates V68 which maintains the potential at 56 and thus over-current protection activated until the control signal 69 goes low resetting the over-current protection i.e. bistable function. The 'activated' state of the over-current protection function is indicated to the control system (the system governing the signal 69) via the feedback signal 73. The 'activated' state of the over-current protection is reset (or de-activated) by the control system i.e. acknowledging that the over-current protection has been activated. This is achieved by setting control signal 69 low in order to reset or de-activate the over-current protection function.

Once the signal 71 via V180 has become low the potential at connection 56 is no longer driven via 68 and the capacitor C3 is discharged via resistors R21 and R62. Once capacitor C3 has discharged sufficiently, switch V154 may be turned ON once again by setting the control signal 69 to high.

In the preferred embodiment shown in Figure 1, the valve which is used to limit the current and the valve which is used to switch off the signal current path are one and the same valve. However, it is also possible, that two different valves in the signal current path are used while the limiting function and for the function of switching off the path. Using only one valve for the two functions has the advantage that one valve can be saved and costs are lower. It should be noted that valve V154 can carry high currents and that costs for the valve are higher than for other valves which are designed for smaller currents, such as valve V45 and valve V46.

## Claims

1. An over-current protection device (2b) for protecting against high electric currents, comprising the following:
a) a first electric valve (V154) which is arranged in a path (21 b) of the current,
b) a first control unit (D8) which is connected to the first electric valve (V154) and which is adapted to control whether the first valve (V154) is open or closed,
c) a current detecting unit (R62, V45) which is arranged in the path (21 b) and/or is connected to the path (21 b) and which is adapted to generate a signal which depends on the size of the current which is carried by the path (21 b),
d) a second control unit (V46) which is connected to the current detecting unit (R62, V45) and to a gradually closable valve (V154) in the path (21 b) and which is adapted to limit the size of the current through the gradually closable valve (V154) by controlling this valve when the current in the path (21 b) increases,
e) a control arrangement (C3, A6, D8) which is connected to the first electric valve (V154) and which is adapted to close the first electric valve (V154) when the size of the current through the path (21 b) reaches or exceeds a threshold value for a time longer than a time interval of predetermined length.

2. The device of the preceding claim, wherein the first valve (V154) and the gradually closable valve (V154) are one and the same valve in the path (21 b).

3. The device of one of the preceding claims, wherein the control arrangement comprises a capacitor (C3) which is charged when the current through the path (21 b) reaches or exceeds the threshold value and which triggers a process of closing the first electric valve (V154) when the voltage of the capacitor (C3) reaches a predetermined value.

4. The device of the preceding claim, wherein the capacitor (C3) is connected to a comparator (A6), wherein the comparator (A6) is adapted to compare the voltage of the capacitor (C3) with a reference voltage and is adapted to output a predefined signal to the first control unit (D8), when the voltage of the capacitor (C3) reaches the reference voltage when the voltage exceeds the reference voltage.

5. The device of one of the preceding claims, wherein the current detecting unit (R62, V45) comprises a resistor (R62) which is arranged in the path (21 b) and wherein the voltage across the resistor (R62) is used as the signal which depends on the size of the current which is carried by the path (21 b).

6. The device of one of the preceding claims, wherein the second control unit comprises a second valve (V46) which is connected to a control input of the gradually closable valve (V154).

7. The device of one of the preceding claims, wherein the device comprises an element which is adapted to produce a first logic signal, if a current flows through the path (21 b), wherein the current through the path (21 b) is greater than a threshold value, and to produce a second logic signal, if a current flows through the path (21 b), wherein the current through the path (21 b) is smaller than a threshold value.

8. The device of one of the preceding claims, wherein the device comprises a operating state signal generating path (21 a), which is the path of the current in the device (2) of one of the preceding claims, comprises the path of the current in the device (2) of one of the preceding claims or is connected in series to the path (21 b) of the current in the device (2) of one of the preceding claims, and wherein the signal generating path (21 a) comprises an arrangement (V179) which is adapted to produce a logic signal, either signalling that the path (21 b) is open or signalling that the path (21 b) is closed.

9. An arrangement comprising the device (2) of one of the preceding claims and further comprising a converter the operation of which is controlled using the first logic signal.

10. A switching device (2a) which comprises the over-current protection device (2b) of one of claims 1-6 or is combined with the device (2b) of one of claims 1-6, wherein the switching device is adapted to be controlled by the logic signal so that
- a first state of the logic signal controls the switching device to switch off the path (21) of the electric current and/or to keep the path (21 b) closed;
- a second state of the logic signal controls the switching device to switch on the path (21) of the electric current and/or to keep the path (21 b) open.

11. The switching device of the preceding claim, wherein the switching device is adapted to use the logic signal to switch on or off the path (21 b) by using the first valve (V154) as a switching element to perform the control.

12. A signal generating device (2a) for generating an electric signal, wherein the electric signal is a first logic signal when a signal generating path (21 a) carries an electric current, wherein the electric signal is a second logic signal when the signal generating path (21 a) does not carry an electric current and wherein
- the signal generating device (2a) comprises the device (2b) of one of claims 1-6 or is combined with the device (2b) of one of claims 1-6 and
- the signal generating path (21 a) is the path (2) of the current in the device (2) of one of claims 1-6, comprises the path of the current in the device (2) of one of claims 1-6 or is connected in series to the path of the current in the device (2) of one of claims 1-6.

13. A method of operating a signal generating device (2) for generating an electric signal, wherein the electric signal is a first logic signal when a signal generating path (2b) carries an electric current and wherein the method comprises the following:
- limiting the size of the current through a path (2b) of the electric current, if the current reaches or exceeds a predetermined threshold value and,
- switching off the current if the current exceeds the predetermined threshold value for a time which is longer than a time interval of predetermined length.
